(19) Europäisches Patentamt
European Patent Office
Office européen des brevets

(11)  **EP 4 460 748 B1**

(12)  **EUROPEAN PATENT SPECIFICATION**

(45) Date of publication and mention
of the grant of the patent:
**10.12.2025  Bulletin 2025/50**

(21) Application number: **22817280.5**

(22) Date of filing: **15.11.2022**

(51) International Patent Classification (IPC):
**G06N 3/063** (2023.01)      **G06F 7/523** (2006.01)

(52) Cooperative Patent Classification (CPC):
**G06F 7/523;** G06N 3/0464; G06N 3/063

(86) International application number:
**PCT/EP2022/082009**

(87) International publication number:
**WO 2023/134905 (20.07.2023 Gazette 2023/29)**

(54)  **PROCESSOR IMPLEMENTATION**

PROZESSORIMPLEMENTIERUNG

MISE EN OEUVRE D'UN PROCESSEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority:  **12.01.2022  GB 202200336**

(43) Date of publication of application:
**13.11.2024  Bulletin 2024/46**

(73) Proprietor: **Xmos Ltd
Bristol Gloucestershire BS1 2LZ (GB)**

(72) Inventors:
• **MULLER, Hendrik Lambertus
Bristol, Gloucestershire BS1 2LZ (GB)**
• **STANFORD-JASON, Andrew
Bristol, Gloucestershire BS1 2LZ (GB)**

(74) Representative: **Page White Farrer
Bedford House
21a John Street
London WC1N 2BF (GB)**

(56) References cited:
**US-A1- 2021 397 930**

EP 4 460 748 B1

**Description**

Technical Field

The present disclosure relates to a method and compiler for determining an inner product of non-binary vectors using a binary-logic unit of a processor.

Background

Shown below is a simple example of an inner (dot) product between two arrays of values x[], y[]. The output value z (which is a scalar) is calculated as sum(prod(x[], y[])).

$$x[]=[+2, +3, -2, -5]$$

$$y[]=[+1, -1, +1, -1]$$

$$z=x[].y[]=(2*1)+(3*-1)+(-2*1)+(-5*-1)=2$$

This is an important calculation in many applications. For example, in a convolutional neural network, a convolution operation comprises performing an inner product between a kernel and different portions of an input array to generate respective elements of an output array. Another example is the application of a filter to a digital signal (such as a PDM, Pulse Density Modulated, signal) to generate a filtered signal O[]. As a simple example, consider the following filter f[] and signal s[]:

$$f[]=[+17, -23, +56, -28]$$

$$s[]=[+1, +1, -1, -1, -1, +1, +1, -1, -1, -1…]$$

$$O[]=[-34, +12, -78, +34, +44, -34, +12…]$$

Each element of the output O[] is equal to the inner product of the filter f[] with a different respective portion of the signal s[], shifted by one place each time. Here, for example, the first two output values are calculated as:

$$(17*1)+(-23*1)+(56*-1)+(-28*-1) = -34$$

$$(17*1)+(-23*-1)+(56*-1)+(-28*-1) = 12$$

US 2021/397930 discloses a non-volatile memory device which includes an array of non-volatile memory cells that are configured to store weights of a neural network. Associated with the array is a data latch structure that includes a page buffer, which can store weights for a layer of the neural network that is read out of the array, and a transfer buffer, that can store inputs for the neural network. The memory device can perform multiply and accumulate operations between inputs and weight of the neural network within the latch structure, avoiding the need to transfer data out of the array and associated latch structure for portions of an inference operation. By using binary weights and inputs, multiplication can be performed by bit-wise XNOR operations. The results can then be summed and activation applied, all within the latch structure.

Summary

According to a first aspect disclosed herein, there is provided a method of determining an inner product between a first array of elements and a second array of elements using a binary logic unit which is configured to determine inner products between binarized arrays consisting of binarized elements, the first array including at least one non-binarized element, the method comprising:

decomposing the first array into a plurality of binarized arrays by determining a respective binarized vector representation of each element of the first array in a vector basis having a set of basis vectors, each binarized vector representation consisting of a respective set of binarized components in the vector basis such that a linear combination of the binarized components with the respective basis vectors is equal to the respective element of the first array; wherein each binarized array comprises the binarized values corresponding to the same basis vector from each of the binarized vector representations;

determining, using said binary logic unit, a respective result equal to the inner product of the second array and each respective one of the plurality of binarized arrays;

combining the results into an output by summing the results each weighted by the respective basis vector of the binarized array used to generate that result.

In an example, said decomposing comprises determining the respective binarized vector representations by accessing a memory storing a predetermined binarized vector representation of each of the elements of the first array.

In an example, said decomposing is performed at compile time.

In an example, said vector basis is of the form: basis[j] = 2j for $0 \leq j < N-1$; basis[j] =2j-1 for j=N-1, each linear combination being equal to double the respective element of the first array; and said combining the results into the output comprises dividing the weighted sum by said integer multiple.

In an example, the method comprises decomposing the second array into a second plurality of binarized arrays; and determining, using said binary logic unit, a respective result equal to the inner product of each of the second plurality of binarized arrays and each of the first plurality of binarized arrays.

According to a second aspect disclosed herein, there is provided a method of applying a filter to a binary signal to generate a filtered signal comprising a plurality of values, the method comprising determining each value of the filtered signal as an inner product between the filter and a respective portion of the binary signal using the method of the first aspect of any example thereof.

In an example, the method comprises at least one filtering stage implemented using the method of the second aspect, and at least one decimation stage.

In an example, the binary signal is a Pulse Density Modulation, PDM, signal.

According to a third aspect disclosed herein, there is provided a compiler for compiling code into a series of machine code instruction for execution by a processor comprising a binary logic unit, said machine code instruction comprising at least a binary inner product instruction for execution by the binary logic unit, the compiler being configured to: in response to receiving code comprising an inner product operation between a first array and a second array, the first array comprising a plurality of elements including at least one non-binary element, compile said code into a series of machine code instruction which when executed by the processor cause the processor to determine the inner product by:

decomposing the first array into a plurality of binary arrays by determining a respective binary vector representation of each element in a vector basis having a set of basis vectors, each binary vector representation consisting of a respective set of binary components in the vector basis such that a linear combination of the binary components with the respective basis vectors is equal to the respective element of the first array; wherein each binary vector comprises the binary values corresponding to the same basis vector from each of the binary vector representations;

determining, using said binary logic unit, a respective result equal to the inner product of the second array and each respective one of the plurality of binary arrays;

combining the results into an output by summing the results each weighted by the respective basis vector of the binary array used to generate that result.

In an example, the machine code instructions cause the processor to decompose the first array into the plurality of binary arrays by accessing a memory storing a predetermined binary vector representation of each of the elements of the first array.

In an example, said decomposing is performed at compile time.

In an example, the compiler is configured to:

in response to receiving code comprising a convolution operation between a filter and a binary signal to generate a filtered signal comprising a plurality of values, the filter comprising a plurality of elements including at least one non-binary element, compile said code into a series of machine code instruction which when executed by the processor cause the processor to:

determine each value of the filtered signal as an inner product between the filter and a respective portion of the binary signal using said decomposing, determining, and combining.

Brief Description of the Drawings

To assist understanding of the present disclosure and to show how embodiments may be put into effect, reference is made by way of example to the accompanying drawings in which:

Figure 1 shows schematically a computer system in accordance with examples described herein;

Figure 2 shows schematically a method of applying a filter according to examples described herein;

Figure 3 shows schematically an example of an XNOR-SUM unit; and

Figures 4a-d show schematically the use of a rotating accumulator in accordance with examples described herein.

Detailed Description

As used herein, the term "binarized array" refers to an array or vector of elements in which each element takes one of only two distinct values (e.g. +1 and -1). For example, a binarized array may be [+1, -1, -1, +1, -1...].

Some types of modern processor comprise a dedicated binary logic unit for performing inner products on binarized arrays.

An example of such a binary logic unit is a so-called "XNOR-SUM unit" or simply "XNOR unit" which performs inner products on binarized arrays using an XNOR-SUM instruction. An XNOR unit can efficiently perform these types of calculations using XNOR logic based on the observation that multiplication of the values -1 and +1 has the same output behaviour as an XNOR logic gate:

| A | B | A*B | | A | B | XNOR(A,B) |
|---|---|-----|---|---|---|-----------|
| -1 | -1 | +1 | | 0 | 0 | 1 |
| -1 | +1 | -1 | | 0 | 1 | 0 |
| +1 | -1 | -1 | | 1 | 0 | 0 |
| +1 | +1 | +1 | | 1 | 1 | 1 |

That is, inner products between binarized arrays can be implemented by representing the value -1 as a logical bit value 0 and representing the value +1 as a logical bit value 1.

Another example of a binary logic unit is a so-called "XOR-SUM unit" or simply "XOR unit" which performs inner products on binarized arrays using an XOR-SUM instruction. The operation of an XOR unit is similar to that of an XNOR unit except that it uses XOR logic instead of XNOR logic. In an XOR unit, the value -1 is represented by the logical bit value 1, and the value +1 is represented by the logical bit value -1. Like with the XNOR operation, an XOR operation performs the multiplication on two 1-bit values as follows:

| A | B | A*B | | A | B | XOR(A,B) |
|---|---|-----|---|---|---|----------|
| -1 | -1 | +1 | | 1 | 1 | 0 |
| -1 | +1 | -1 | | 1 | 0 | 1 |
| +1 | -1 | -1 | | 0 | 1 | 1 |
| +1 | +1 | +1 | | 0 | 0 | 0 |

For simplicity, the following disclosure will consider only an XNOR unit. It is appreciated that similar concepts apply equally in relation to an XOR unit.

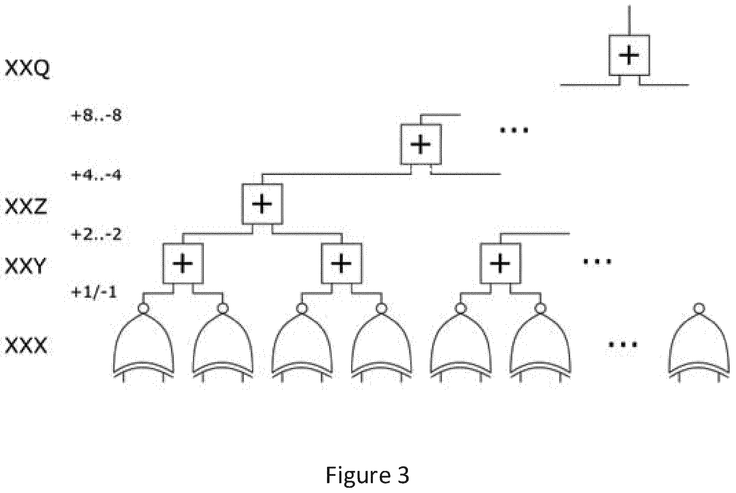

Figure 3 shows an example of an XNOR unit 201. The XNOR unit 201 comprises N XNOR logic gates. The outputs of the XNOR logic gates are connected pair-wise in a tree of adders. In operation, each XNOR gate calculates the product between two binarized values at its inputs, as explained above. In this way, the N XNOR gates can calculate the pointwise product between two binarized arrays of N binarized values. By connecting these XNOR gates to a tree of adders as shown in Figure 3, the inner product of the two binarized arrays is calculated. This is shown in Figure 3: Layer XXX shows the N XNOR gates, layer XXY shows N/2 adders, each capable of adding two 1-bit values into a 2-bit value. Layer XXZ shows N/2 adders that are each capable of adding two 2-bit values into a 3-bit value, etc, and at the top a single adder XXQ adds two ($^2$log(N)-1)-bit values into two ($^2$log(N))-bit values. Note that all the final results is always even, and the final bit of the final adder does therefore not need to be implemented.

Because XNOR units are not able to handle non-binarized values (i.e. values other than 0 and 1, representing values -1 and +1, respectively), they cannot implement a generic inner product involving one or more non-binarized arrays. Specifically, an inner product between a first array (vector) and a second array (vector) cannot be directly implemented by an XNOR unit if one or more of the first array and second array is a non-binarized array (comprising one or more non-binarized values).

Examples described herein allow an inner product between a (non-binarized) first array and a (binarized) second array to be implemented using an XNOR logic unit, meaning that other non-binary hardware is not required. In short, this is achieved by converting the (non-binarized) first array into a plurality of "component" binarized arrays. The inner product of each of these "component" binarized arrays with the (binarized) second array can then be executed using the XNOR unit to generate a set of results. These results are then be used to reconstruct the final output.

Enabling an XNOR unit to perform an inner product in this way also means that an XNOR unit can be used in the implementation of any more complex calculation that involves an inner product. An example of such a calculation is a convolution between a kernel and a data array, such as may be implemented in a convolutional layer of a neural network. Another example is the application of a filter to a digital signal, such as a Pulse-Density-Modulation (PDM) signal.

In the below, the general technique will first be described using pseudo-code for a specific example in the context of PDM signal decimation, before turning to other more general examples.

For example, observe that in order to decimate a 1-bit signal the following computation is required: $\text{sum}_i(\text{pdm}[i] * \text{coefficients}[i])$, where pdm[] is an array of bits (the PDM signal) to be interpreted at -1.0 and +1.0 (i.e. a binarized array), coefficients[] is an array of coefficients, typically signed integer values, and $\text{sum}_i$ is a sum over all array indices i. If the coefficients are floating point numbers, one typically quantises these values to integers of an appropriate length e.g. 16 bits. The inner product operation may be represented in pseudo-code as follows:

```
sum=0
for(i over all indices)
       sum += pdm[i]*coefficients[i]
```

It is observed that every even signed integer in the range $(-2^N...2^N)$ can be constructed as a sum of $2^N$ components as number = $\text{sum}_j(\text{basis}[j]*\text{component}[j])$, where component[j] is one or -1.0 and +1.0 and:

$$\text{basis}[j] = \begin{array}{l} 2^j \text{ for } 0 \leq j < N-1 \\ 2^j-1 \text{ for } j=N-1 \end{array}$$

For example, considering numbers in the range [-254...254] that are constructed as a sum of 8 products, the number 12 is constructed as: (127*+1)+(64*-1)+(32*-1)+(16*-1)+(8*+1)+(4*-1)+(2*+1)+(1*-1). Hence, the number 12 can be represented in the basis above as the binarized vector of value [+1, -1, -1, -1, +1, -1, +1, -1].

The decomposition of an even number in the range $(-2^N...2^N)$ can be defined as a new function: decompose(number, basis, j)

where j is the basis function index. This decompose function transforms an even number into a binarized array comprising j binarized values in the specified basis. Decomposing and recomposing the coefficients to be applied to the PDM signal enables us to rewrite the operation $\text{sum}_i(\text{pdm}[i] * \text{coefficients}[i])$ from earlier using the basis functions as:

$\text{sum}_i(\text{pdm}[i] * \text{sum}_j(\text{basis}[j]* \text{decompose (coefficients }[i]*2, \text{basis, j})/2))$

We can now rearrange this by pushing the inner $\text{sum}_j$ and basis[] out which yields:

$\text{sum}_j(\text{sum}_i(\text{pdm}[i] * \text{decompose(coefficients}[i]*2, \text{basis, j}))*\text{basis}[j])/2$.

In other words, the pseudo-code from earlier above can be re-written as:

```
sum=0
for (j over 0...N-1)
       partsum=0
       for(i over all indices)
               partsum += pdm[i]*decompose(coefficients[i]*2,
basis, j);
       sum += partsum*basis[j]
sum /= 2
```

The decomposition of coefficients is a constant function that can be precalculated (e.g. at compile time). In addition, the inner-loop (over i) now maps to the XNOR-SUM instruction that calculates a sum of binarized products. This means that an XNOR unit can be used for this operation, as shown below:

```
sum=0
for (j over 0...N-1)
        partsum=XNOR_SUM(pdm[], decompose(coefficients[],
basis, j[]))
        sum += partsum*basis[j]
sum /= 2
```

This enables a software function to efficiently decimate, for example, a PDM signal. One advantage of using a software unit to decimate a PDM signal, as opposed to a hardware block, is that is it now a software decision as to with what precision and filters to decimate the signal. More compute and memory can be used to improve decimation, or less to make it faster and lower power.

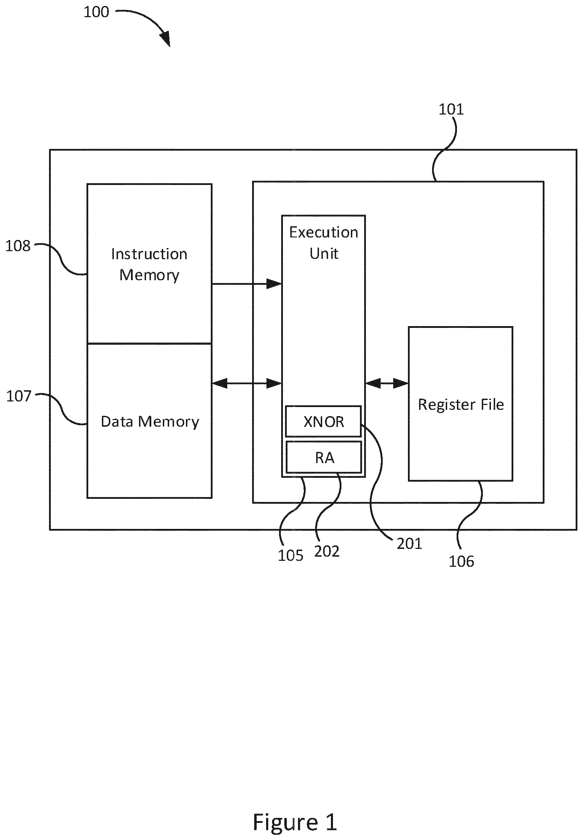

Figure 1 illustrates an example computer system 100 comprising a processor 101, a data memory 107, and an instruction memory 108. The processor 101 comprises an execution unit 105 and a register file 106. It is appreciated that the computer system 100 shown in Figure 1 is highly simplified and that in reality the computer system 100 may comprise many more components, examples of which include a pipeline comprising a series of pipeline stages (e.g. a fetch stage, a decode stage, etc.) and a scheduler.

The data memory 107 is the memory where the data to be operated upon by computations and the results of the computations may be ultimately stored. The data memory 107 may be stored on the same physical unit as the processor 101. Alternatively, the data memory 107 may be storage on a separate unit, e.g. an external memory. In embodiments such as shown in Figure 1, the instructions are stored in, and fetched from, an instruction memory 108 that is separate from the data memory 107. These may be separate memory devices or separate regions of the same memory device. Either way, since the instruction memory 108 and data memory 107 have non-overlapping address spaces, this means there is no risk that the instruction fetches performed by the fetch stage 103 will contend with the data access (load or store) being performed by the memory access stages. The data memory may comprise, but is not limited to, volatile storage (e.g., random access memory), non-volatile storage (e.g., read-only memory), flash memory, or any combination of such memories.

The execution unit 105 is operatively coupled to the instruction memory 108 and the data memory 107 and the register file 106. In operation, the execution unit 105 retrieves instructions from the instruction memory 108 and executes them, which may involve reading and/or writing data to and/or from the data memory 107 and/or register file 106, as is known per se in the art. As used herein, the term "instruction" refers to a machine code instruction, i.e. one of the fundamental instruction types of the instruction set of a processor, each instruction type defined by a single opcode and one or more operand fields. An operand can be an immediate operand, i.e. the value to be operated upon is encoded directly into the instruction; or alternatively an operand can take the form of an indirect operand, i.e. an address where the value to be operated upon can be found. For instance, an add instruction may take three pointers as operands: two specifying addresses from which to take values to be added, and another specifying a destination address to which to write the result.

The execution unit 105 is able to perform a limited set of operations in response to instructions from a predefined set, called the instruction set. A typical instruction set may comprise, for example, instructions such as LOAD, ADD, STORE, etc. which the execution unit 105 is configured to understand and implement in response to a respective instruction. Accordingly, the execution unit 105 generally comprises one or more arithmetic computation units for executing such instructions, such as a fixed point arithmetic unit (AU), logic unit (LU), arithmetic logic unit (ALU), and floating point unit (FPU). Arithmetic refers to mathematical operations on numbers: e.g. multiply, add, divide, subtract, etc.

As illustrated in Figure 1, the execution unit 105 also comprises an XNOR unit 201 and optionally a rotating accumulator 202. The rotating accumulator 202 is for performing a multiple-accumulate operation as will described later below. The applicant's earlier Patent Application Number WO2021/160300 describes a rotating accumulator in detail.

XNOR units 201 per se are known in the art. One such processor is the XMOS XCORE.AI processor. As mentioned earlier, the XNOR unit 201 is for efficiently implementing instructions of the form $\text{sum}_i(x[i], y[i])$, where x[] and y[] are arrays of bits, i.e. 1s and 0s, each bit being interpreted to represent one of -1 and +1 (the specific choice of which of 1, 0 represents -1 and +1 is a implementation choice, the only difference being negating the final answer).

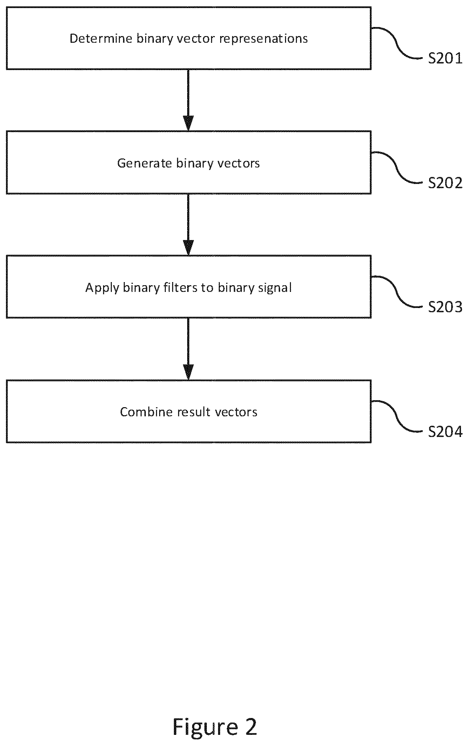

Figure 2 shows a method performed by the execution unit 105 of implementing an inner product between a first array x[] and a second array y[]. For ease of explanation, the arrays from the earlier example will be used such that the output z is known:

$$x[]=[+2, +3, -2, -5]$$

$$y[]=[+1, \quad -1, \quad +1, \quad -1]$$

$$z=x[].y[]=(2*1)+(3*-1)+(-2*1)+(-5*-1)=2$$

Note that in this example, the second array y[] is already a binarized array (i.e. each element of the second array y[] is a binarized value). The first array x[] is not a binarized array, as it comprises at least one element which is not binarized. Therefore, the inner product above cannot be directly implemented using the XNOR unit 201.

It is appreciated that the method of Figure 2 follows the fetch 103 and decode 104 stages wherein an instruction to perform the inner product is fetched and decoded, respectively. The first array x[] and array vector y[] may be pre-loaded into register 106 where they can be accessed by the execution unit 105.

At S201, the execution unit 105 determines a respective binarized representation of each element ("coefficient" or "component") x[i] in the first array x[]. Each binarized representation comprises a vector of binarized values (-1 or +1) representing the respective element x[i] in a basis basis[j] indexed by an index value j. That is, each element x[i] is represented as:

$$x[i] = \sum basis[j].component[j]$$

In examples, the vector of binarized values may represent a multiple (which may be an integer multiple, or a non-integer multiple) of the elements of the first array x[]. This can be accounted for later by dividing the final answer by the same number (i.e. the same integer or non-integer). An example was given earlier in which every signed even integer in the range $-(2^N...2^N)$ can be represented as a binarized array with components -1 or +1 in the following basis:

$$basis[j] = \begin{array}{l} 2^j \text{ for } 0 \leq j < N-1 \\ 2^j-1 \text{ for } j=N-1 \end{array}$$

Hence, for any arbitrary element x[i], 2*x[i] (i.e. double the element) can be represented as a binarized vector consisting of only values -1 or +1 in the basis given above. To continue the example above, the largest value required is 2*5=10. Therefore, N=3 is a sufficiently large range, and therefore double each of the element can be represented with the following basis:

$$basis[j]=[+7, \quad +4, \quad +2, \quad +1]$$

For example, for the first element x[0] is + 2. Double this element (i.e. 4) can be represented in the basis above as [1, -1, 1, -1] because 4=(1*7)+(-1*4)+(1*2)+(-1*1). The binarized representations for the element x[i] in the first array x[] are shown below

$$i=0: \quad x[0]=+2: \quad 2*+2=[+1, \quad -1, \quad +1, \quad -1]$$

$$i=1: \quad x[1]=+3: \quad 2*+3=[+1, \quad -1, \quad +1, \quad +1]$$

$$i=2: \quad x[2]=-2: \quad 2*-2=[-1, \quad +1, \quad -1, \quad +1]$$

$$i=3: \quad x[3]=-5: \quad 2*-5=[-1, \quad -1, \quad +1, \quad -1]$$

In examples, the binarized representation of each element may be predetermined and stored in a register file 106. For example, this could be done at compile time. This is particularly advantageous when a plurality of inner products are to be calculated using the same first array x[] (this is the case, for example, when implementing a convolution or applying a filter to a digital signal).

In examples, the binarized representation of only some of the elements x[i] may be predetermined, with others being calculated on-the-fly at run time. Note for example, that the binarized representation of -X is the same as for X, but with the bits inverted. Hence, if the first array x[] comprises such a pair of elements, the binarized representation of only one of these may be predetermined, with the other being determined later using a bit-reverse instruction which inverts the elements of the first representation. This is particular advantageous, for example, when the first array x[] is a symmetrical filter to be applied to a digital signal (the symmetrical filter comprising a set of positive values and a corresponding set of negative values).

At S202, a plurality of binarized arrays x_j[] is generated using the binarized representations of the elements determined at S201. Each binarized array x_j[] comprises the binarized values with the same index value j from each of the binarized representations. Hence, a binary array x_j[] is generated for each index value j in the binarized vector representations. Each binarized array x_j[] comprises the same number of elements as the first array x[], the difference being that the elements of the binarized arrays x_j[] are all binarized numbers. Note that this is known as a matrix transposition in linear algebra.

In this case, the binarized arrays x_j[] are, for each index value j:

$$j=0: \ x\_0[]=[+1, \ +1, \ -1, \ -1]$$

$$j=1: \ x\_1[]=[-1, \ -1, \ +1, \ -1]$$

$$j=2: \ x\_2[]=[+1, \ +1, \ -1, \ +1]$$

$$j=3: \ x\_3[]=[-1, \ +1, \ +1, \ -1]$$

At S203, the inner product between each binarized array x_j[] and the second array y[] is determined using the XNOR unit 20. To continue the example above, this generates the result values shown below.

$$j=0: \ x\_0[].y[]=0$$

$$j=1: \ x\_1[].y[]=2$$

$$j=2: \ x\_2[].y[]=-2$$

$$j=3: \ x\_3[].y[]=0$$

At S204, the result values are combined into final output by summing the result values each weighted by the respective basis[j] of the binarized array x_j[] used to generate that result value:

$$(7*0)+(4*2)+(2*-2)+(1*0)=4$$

In this case there is also a final step of dividing the answer by two because the elements were doubled in the first step. This generates the final answer of "2", which is the same as expected (the inner product between x[] and y[] is indeed 2). Note that this division by two is simply a shift right by one bit, and that the number is always even so no rounding is necessary.

In other examples, the basis itself may be adjusted to avoid the need for the final division by two (or other integer). For example, the elements of the example basis above may instead be divided by two to give a new basis of [63½, 32, 16, 8, 4, 2, 1, ½]. This basis does not require division by two (or other number) at the final step.

As mentioned, the method above allows for any more complex calculation involving an inner product to be performed using the XNOR unit 201. An example is the application of a filter f[] to a digital signal s[] such as a PDM signal. PDM is a digital encoding of an analogue signal. For example, a microphone may output its signal in PDM format. PDM is a special case of Pulse Code Modulation (PCM) where only a single bit is used to quantise the analogue signal. Rather than using e.g. a 12- or 16-bit signal to represent the signal, a 1-bit signal is used that represents the values -1 or +1. PDM signals are, typically, oversampled (e.g. encoding an audio signal at 3.072 MHz rather than 16 kHz) and noise shaped, and therefore need to be decimated before being useful to a typical digital application. This may involve, for example, the following steps:

- Input a PDM signal at, say, 3.072 MHz;
- Decimate the signal by 192x to 16 kHz, in the process creating a high resolution signal, say 16 bits; and
- Use that 16 kHz signal as the input to a normal digital system.

Decimating a PDM signal involves one or more low-pass filters followed by picking every Nth sample from the signal. For example, decimation may be implemented as follows:

- Low-pass filter the 1-bit 3.072 MHz signal with a 128-tap Finite Impulse Response (FIR) filter;
- Pick every 8th output of the filter to produce a 384 kHz signal with a 16-bit depth;
- Low-pass filter the 16-bit 384 kHz signal with a 48-tap FIR filter;
- Pick every 4th output of this filter to produce a 96 kHz signal with 16-bit depth
- Low-pass filter the 16-bit 96 kHz signal with a 48-tap FIR filter; and
- Pick every 6th output of this filter to produce a 16 kHz signal with 16-bit depth.

The number of stages and the number of taps in each stage provide a trade-off between the amount of compute, amount of memory, and the signal-to-noise ratio (SNR) and ripple of the final output.

Consider the application of the following filter f[] to an example signal s[] to generate an output O[]:

$$f[]=[17, -23, 56, -28]$$

$$s[]=[1, 1, -1, -1, -1, 1, 1, -1, -1, -1 \ldots ]$$

$$O[]=[-34, 12, -78, 34, 44, -34, 12 \ldots]$$

Similarly to above, the filter f[] cannot be applied directly to the signal s[] using the XNOR unit 201 because it comprises non-binarized values. Each value in the output O[] is generated as an inner product between the filter f[] and a different respective portion of the signal s[], e.g. the first value (-34) is the inner product of f[] with the first four elements of the signal s[] i.e. [1, 1, -1, -1], the second value (12) is the inner product of f[] with the second to fifth elements of the signal s[] i.e. [1, -1, -1, -1], etc. Hence, the output O[] can be constructed using the method described above to determine each element of the output O[] using the XNOR unit 201. This will now be described.

Following the earlier example, the largest value required is 2*56=112 and therefore a suitable basis[j] is:

$$basis[j]=[+127, +64, +32, +16, +8, +4, +2, +1]$$

In this basis, twice the value of each coefficient of f[] can be represented as follows:

$$i=0: \ f[0]=+17: \ 2*+17=[+1, -1, -1, +1, -1, -1, -1, +1]$$

$$i=1: \ x[1]=-23: \ 2*-23=[-1, +1, +1, -1, +1, -1, -1, -1]$$

$$i=2: \ x[2]=+56: \ 2*+56=[+1, -1, +1, +1, +1, -1, -1, -1]$$

$$i=3: \ x[3]=-28: \ 2*-28=[-1, +1, +1, -1, -1, -1, +1, +1]$$

Correspondingly, the plurality of binarized filters in this example are:

$$j=0: \ f\_0[]=[+1, -1, +1, -1]$$

$$j=1: \ f\_1[]=[-1, +1, -1, +1]$$

$$j=2: \ f\_2[]=[-1, +1, +1, +1]$$

```
j=3: f_3[]=[+1, -1, +1, -1]

j=4: f_4[]=[-1, +1, +1, -1]

j=5: f_5[]=[-1, -1, -1, -1]

j=6: f_6[]=[-1, -1, -1, +1]

j=7: f_7[]=[+1, -1, -1, +1]
```

Note that the binarized filters correspond to reading off the columns of the binarized coefficient representations as shown above. That is, the binarized filters can be obtained via a matrix transposition of the binarized coefficient representations.

In this case, the XNOR unit 201 is used N times to calculate the N elements of the output array, each element of the output array being the inner product of the filter with a different portion of the signal, each calculated using the method described above. In other words, XNOR unit 201 is used iteratively inside two for-loop. In an inner for-loop it is used to compute the value for each basis function, the partial_sums of which are summed together to form a single output value. In the outer-loop a plurality of output values is computed for different parts of the input stream. As there may be subsampling operation, this outer-loop may skip some sections of the input if appropriate.

In this example, in the first iteration of the outer-loop the first four bits of the input data will be considered, [1,1,-1,-1] these will be multiplied and summed with f_X to yield eight partial_sums:

```
j=0: p_0=sum([+1, -1, +1, -1] * [+1, +1, -1, -1]) * 127 = 0

j=1: p_1=sum([-1, +1, -1, +1] * [+1, +1, -1, -1]) * 64 = 0

j=2: p_2=sum([-1, +1, +1, +1] * [+1, +1, -1, -1]) * 32 = -64

j=3: p_3=sum([+1, -1, +1, -1] * [+1, +1, -1, -1]) * 16 = 0

j=4: p_4=sum([-1, +1, +1, -1] * [+1, +1, -1, -1]) * 8 = 0

j=5: p_5=sum([-1, -1, -1, -1] * [+1, +1, -1, -1]) * 4 = 0

j=6: p_6=sum([-1, -1, -1, +1] * [+1, +1, -1, -1]) * 2 = -4

j=7: p_7=sum([+1, -1, -1, +1] * [+1, +1, -1, -1]) * 1 = 0
```

This yields a total sum of (-64-4) = -68. This process is repeated for each output value that needs to be computed. The summed output vector is therefore [-68, 24, -156, 68, 88, -68, 2], which is an element-by-element addition of the weighted result vector shown above. In this case the answer must also be divided by two (i.e. halved) because the coefficients were doubled in the first step. This generates the final output of O[]=[-34, 12, -78, 34, 44, -34, 12]. As can be seen, the result is the same as expected if the filter f[] had been applied directly to the binarized signal s[].

The final summing can be done using the rotating accumulator 202, as will now be described.

The rotating accumulator 202 comprises a vector unit and acts on an output register. The vector unit is for processing at least two input vectors to generate respective result values. The vector unit forms part of the execution unit 102. The output register may form part of the register file 106, or may be a separate dedicated register. The output register has a plurality of elements for holding different components of the output vector, the plurality of elements including a first end element and a second end element.

The rotating accumulator 202 is configured to i) process, using the vector unit, a first input vector and a second input vector to generate a result value; ii) perform a rotation operation on the plurality of elements of the output register in which the sum of the result value and a value present in the second end element before said rotation is placed in the first end element of the output register. In other words, the rotating accumulator 202 maintains a series of partial sums. The rotating accumulator 202 may implement this in response to a multiply-accumulate instruction. For example, this means that the method above can represented using the following pseudo-code:

```
for (j over 0...N-1)
        partial_sum[j]=XNOR_SUM(pdm[],
decompose(coefficients[], j))
        sum=MULTIPLY_ACCUMULATE_REDUCE(partial_sum[],
basis[])
sum /= 2
```

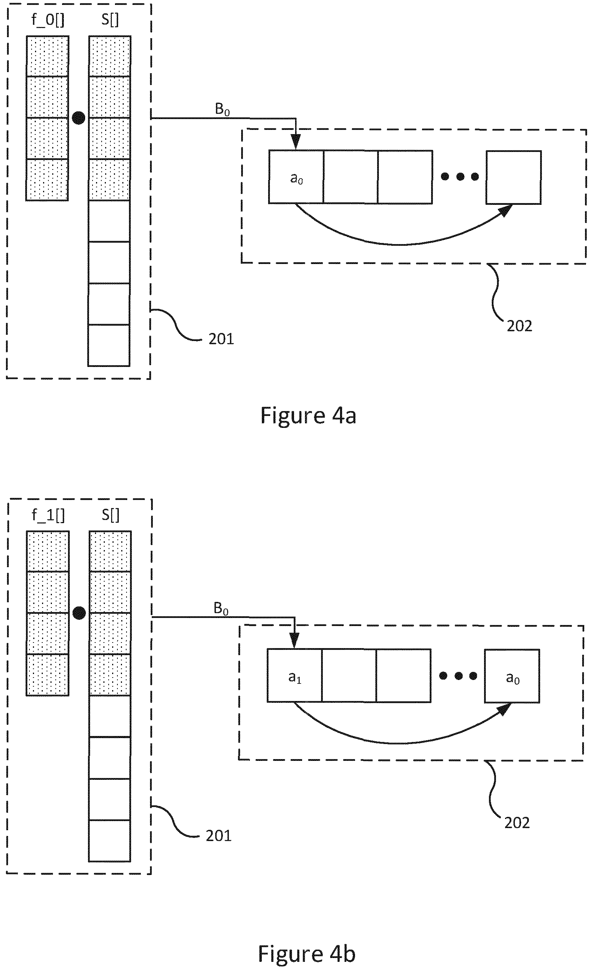

Figures 4a-d show the application of the first two partial, binarized, filters f_0[] and f_1[] to a signal S[] and accumulation of the result using a rotating accumulator 202. The rotating accumulator 202 has a length equal to the number of portions of the signal S[] to which the partial filters will be applied, as described below.

In Figure 4a, the first partial filter f_0[] is applied to a first portion of the signal S[] using the XNOR unit 201. As discussed above, this comprises the XNOR unit 201 determining the inner product between the first partial filter f_0[] and that portion of the signal S[]. This result is weighted by the basis value $B_0$ corresponding to the first partial filter f_0[] to generate the result value $a_0$. The result value $a_0$ is written to an entry in the rotating accumulator 202 (in this example the first, or leftmost entry) and then the rotating accumulator 202 is rotated to the left. In other examples, the result value may be written to a different entry in the rotating accumulator 202 and/or the rotating accumulator 202 may be rotated in a different direction. Moreover, the rotating accumulator 202 may be rotated before or after the result value is written.

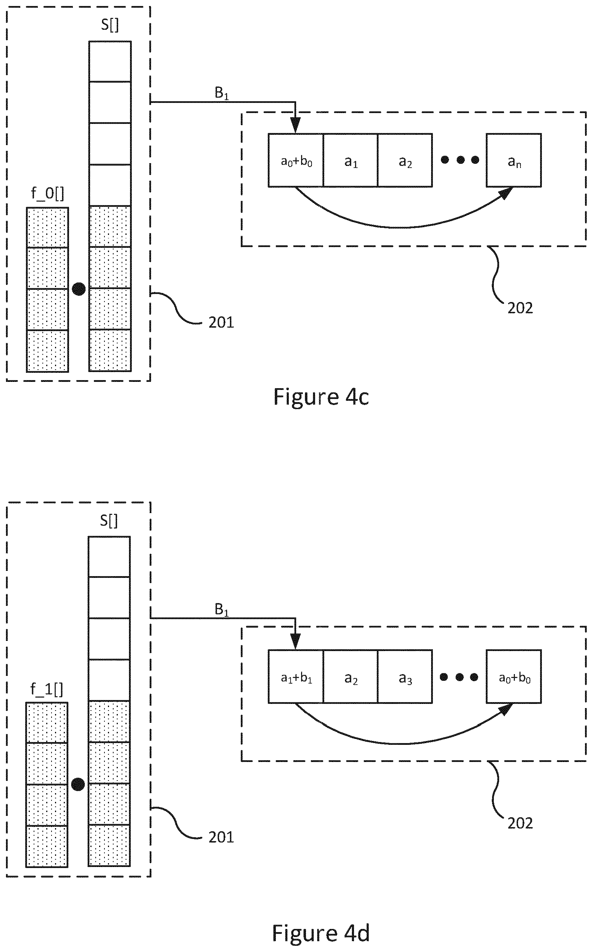

In Figure 4b, the second partial filter f_1[] is applied to the first portion of the signal S[] using the XNOR unit 201 to generate the result value $a_1$. This result value $a_1$ is then written to the rotating accumulator 202 in the same manner described above. The process then repeats for the remaining partial filters f_2[], f_3[], etc. The rotating accumulator 202 contains the same number of elements as there are partial filters. What this means is that once each partial filter has been applied, the rotating accumulator 202 will have performed one full rotation and contain all of the partial sums. The partial filters are then applied similarly to above but with respect to the next portion of the signal S[]. The first two partial filters are shown in Figures 4c and 4d.

In Figure 4c, the first partial filter f_0[] is applied to a second portion of the signal S[] using the XNOR unit 201. In examples, the second (and subsequent, if present) portions of the signal S[] are non-overlapping. to generate the result value $b_0$. The result value $b_0$ is then written to the rotating accumulator 202. The difference this time is that the value $b_0$ is accumulated with (added to) the value $a_0$ already present in that entry of the rotating accumulator 202.

In Figure 4d, the second partial filter f_1[] is applied to the second portion of the signal S[] using the XNOR unit 201 and added to the rotating accumulator 202. Similarly to above, the result value $b_1$ is accumulated with the value $a_1$ already present in the respective entry of the rotating accumulator 202. Again, the process then repeats for the remaining portions of the signal S[]. Hence, once each partial filter has been processed, the rotating accumulator 202 will contain a set of results, each of which has to be multiplied with its respective basis function before adding them together. This is equivalent to one final multiply accumulate and reduce operation. Use of the rotating accumulator 202 in this manner thereby provides an efficient way to automatically generate the final result from each of the partial filters. If the rotating accumulator 202 contains more elements than there are partial filters, then additional rotation operations can be applied to re-align the elements accordingly.

It will be appreciated that the above applied equally in relation to any number of partial filters, a well as to any length of signal S[] and size of rotating accumulator 202. In reality, for example, the XNOR unit 201 may handle K bits simultaneously (say, K = 256), and the rotating accumulator 202 may keep hold of L results (say, L = 16). After applying the XNOR unit L times, for basis functions 0..15, the rotating accumulator now contains the partial sums for the first 16 basis functions applied over the first 256 bits of the input. This can now be run once more for the next 256 bits, and the rotating accumulator will contains the results for the first 16 basis functions applied over the first 512 bits of the signal (a fresh set of 256 coefficients is required for the second step). Once complete, a single reducing multiply accumulate instruction is performed on the 16 partial results to return the final answer, in this case a 512-bit input convolved with a 512-tap 16-bit filter.

In the case where neither the signal nor the filter coefficient comprise binarized values, both coefficients and signal can be decomposed as described before, and if the number of basis functions is small enough, it can still be efficient to use the XNOR unit. Say, both coefficients and signal use two basis functions $basis_{signal}$ and $basis_{coefficient}$, then we can compute an outer product $basis_{signal} * basis_{coefficient}$, and for each value in the outer product we use the XNOR unit to calculate the contribution of the inputs to that combined basis function. For example, suppose that the signal has basis functions (+2, +1), this means that with two bits the values (2+1, 2-1, -2+1,-2-1) can be represented (3, 1, -1, -3), and suppose that the coefficient has basis functions (+3, +2, +1) representing the values (6, 4, 2, 0, -2, -4, -6); then the outer product is six values ((6, 4, 2), (3, 2, 1)). Each signal bit gets multiplied with each coefficient bit using the XNOR-unit as before, and the relative weights before summed together are the combined basis functions. For small numbers of input basis functions this is an efficient way to compute the output values.

The processor may be a pipelined processor. In a pipelined processor, the execution unit is divided into a series of pipeline stages, each for performing a particular type of operation. The pipeline will typically include a fetch stage, decode stage, a register read stage, at least one compute stage, and one or more memory access stages. The instruction fetch stage fetches a first instruction from memory and issues it into the first stage of the pipeline. In the next processor cycle the decoded instruction passes down to the next stage in the pipeline, e.g. the register read stage. At the same time, the fetch stage fetches a second instruction from the instruction memory into the decode stage. In the next successive processor cycle after that, the first instruction is passed to the third pipeline stage, e.g. compute stage, while the second instruction is passed to the second pipeline stage, and a third instruction is issued into the first pipeline stage, and so forth. This helps keep the processor busy and thereby reduces latency, since otherwise the processor would need to wait for a whole instruction to execute before issuing the next into the execution unit.

The processor may be a multi-threaded processor. In a multi-threaded processor, the processor comprises a plurality of sets of context registers, each set of context registers representing a context (i.e. program state) of a respective one of multiple currently-executing program threads. The program state comprises a program counter for the respective thread, operands of the respective thread, and optionally respective status information such as whether the thread or context is currently active.

The processor further comprises a scheduler which is configured to control the instruction fetch stage to temporally interleave instructions through the pipeline, e.g. in a round-robin fashion. Threads interleaved in such a manner are said to be executed concurrently. In the case where the execution unit is pipelined, then as the instruction of one thread advances through the pipeline from one pipeline stage to the next, the instruction of another thread advances down the pipeline one stage behind, and so forth. This interleaved approach is beneficial as it provides more opportunity for hiding pipeline latency. Without the interleaving, the pipeline would need mechanisms to resolve dependencies between instructions in the pipeline (the second instruction may use the result of the first instruction, which may not be ready in time), which may create a pipeline bubble during which the second and further instructions are suspended until the first instruction has completed execution.

Reference is made herein to data storage for storing data. This may be provided by a single device or by plural devices. Suitable devices include for example a hard disk and non-volatile semiconductor memory (including for example a solid-state drive or SSD).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments.

**Claims**

1. A method of determining an inner product between a first array of elements and a second array of elements using a binary logic unit (201) of a processor which is configured to determine inner products between binarized arrays consisting of binarized elements, the first array including at least one non-binarized element, the method comprising:

   decomposing (S201) the first array into a plurality of binarized arrays by determining a respective binarized vector representation of each element of the first array in a vector basis having a set of basis vectors, each binarized vector representation consisting of a respective set of binarized components in the vector basis such that a linear combination of the binarized components with the respective basis vectors is equal to the respective element of the first array; wherein each binarized array comprises the binarized values corresponding to the same basis vector from each of the binarized vector representations;
   determining (S202), using said binary logic unit (201), a respective result equal to the inner product of the second array and each respective one of the plurality of binarized arrays;
   combining (S203) the results into an output by summing the results each weighted by the respective basis vector of the binarized array used to generate that result.

2. A method according to claim 1, wherein said decomposing comprises determining the respective binarized vector representations by accessing a memory storing a predetermined binarized vector representation of each of the elements of the first array.

3. A method according to claim 1 or claim 2, wherein said decomposing is performed at compile time.

4. A method according to any of claims 1 to 3, wherein said vector basis is of the form: basis[j] = 2j for 0≤j<N-1; basis[j] =2j-1 for j=N-1, each linear combination being equal to double the respective element of the first array; and wherein said combining the results into the output comprises dividing the weighted sum by said integer multiple.

5. A method according to any of claims 1 to 4, comprising decomposing the second array into a second plurality of binarized arrays; and determining (S202), using said binary logic unit (201), a respective result equal to the inner product of each of the second plurality of binarized arrays and each of the first plurality of binarized arrays.

6. A method of applying a filter to a binary signal to generate a filtered signal comprising a plurality of values, the method comprising determining each value of the filtered signal as an inner product between the filter and a respective portion of the binary signal using the method of any of claims 1 to 5.

7. A method of decimating a binary signal, the method comprising at least one filtering stage implemented using the method of claim 6, and at least one decimation stage.

8. A method according to claim 6 or claim 7, wherein the binary signal is a Pulse Density Modulation, PDM, signal.

9. A compiler for compiling code into a series of machine code instruction for execution by a processor (100) comprising a binary logic unit (201), said machine code instruction comprising at least a binary inner product instruction for execution by the binary logic unit (201), the compiler being configured to:
in response to receiving code comprising an inner product operation between a first array and a second array, the first array comprising a plurality of elements including at least one non-binary element, compile said code into a series of machine code instruction which when executed by the processor (100) cause the processor (100) to determine the inner product by:

decomposing (S201) the first array into a plurality of binary arrays by determining a respective binary vector representation of each element in a vector basis having a set of basis vectors, each binary vector representation consisting of a respective set of binary components in the vector basis such that a linear combination of the binary components with the respective basis vectors is equal to the respective element of the first array; wherein each binary vector comprises the binary values corresponding to the same basis vector from each of the binary vector representations;
determining (S202), using said binary logic unit (201), a respective result equal to the inner product of the second array and each respective one of the plurality of binary arrays;
combining (S203) the results into an output by summing the results each weighted by the respective basis vector of the binary array used to generate that result.

10. A compiler according to claim 9, wherein the machine code instructions cause the processor (100) to decompose the first array into the plurality of binary arrays by accessing a memory (102) storing a predetermined binary vector representation of each of the elements of the first array.

11. A compiler according to 9 or claim 10, wherein said decomposing is performed at compile time.

12. A compiler according to any of claims 9 to 11, being configured to:
in response to receiving code comprising a convolution operation between a filter and a binary signal to generate a filtered signal comprising a plurality of values, the filter comprising a plurality of elements including at least one non-binary element, compile said code into a series of machine code instruction which when executed by the processor (100) cause the processor (100) to:
determine each value of the filtered signal as an inner product between the filter and a respective portion of the binary signal using said decomposing, determining, and combining.

**Patentansprüche**

1. Verfahren zum Bestimmen eines inneren Produkts zwischen einem ersten Array von Elementen und einem zweiten Array von Elementen unter Verwendung einer binären Logikeinheit (201) eines Prozessors, der so konfiguriert ist, dass er innere Produkte zwischen binärisierten Arrays bestimmt, die aus binärisierten Elementen bestehen, wobei das erste Array mindestens ein nicht binärisiertes Element einschließt, das Verfahren umfassend:

Zerlegen (S201) des ersten Arrays in eine Vielzahl von binärisierten Arrays durch Bestimmen einer jeweiligen binärisierten Vektordarstellung jedes Elements des ersten Arrays in einer Vektorbasis mit einem Satz von Basisvektoren, wobei jede binärisierte Vektordarstellung aus einem jeweiligen Satz von binärisierten Komponenten in der Vektorbasis besteht, so dass eine lineare Kombination der binärisierten Komponenten mit den jeweiligen Basisvektoren gleich dem jeweiligen Element des ersten Arrays ist; wobei jedes binärisierte Array die binärisierten Werte umfasst, die demselben Basisvektor aus jeder der binärisierten Vektordarstellungen entsprechen;

Bestimmen (S202), unter Verwendung der binären Logikeinheit (201), eines jeweiligen Ergebnisses, das dem inneren Produkt des zweiten Arrays und jedes jeweiligen der Vielzahl binärer Arrays entspricht;

Kombinieren (S203) der Ergebnisse zu einer Ausgabe durch Summieren der Ergebnisse, die jeweils mit dem jeweiligen Basisvektor des binärisierten Arrays gewichtet sind, der zum Erzeugen dieses Ergebnisses verwendet wurde.

2. Verfahren nach Anspruch 1, wobei das Zerlegen das Bestimmen der jeweiligen binärisierten Vektordarstellungen durch Zugreifen auf einen Speicher, der eine vorbestimmte binärisierte Vektordarstellung jedes der Elemente des ersten Arrays speichert, umfasst.

3. Verfahren nach Anspruch 1 oder Anspruch 2, wobei das Zerlegen zur Kompilierungszeit durchgeführt wird.

4. Verfahren nach einem der Ansprüche 1 bis 3, wobei die Vektorbasis die Form hat: Basis[j] = 2j für 0≤j<N-l; Basis[j] =2j-l für j=N-l, wobei jede lineare Kombination gleich dem Doppelten des jeweiligen Elements des ersten Arrays ist; und wobei das Kombinieren der Ergebnisse zu der Ausgabe das Dividieren der gewichteten Summe durch das ganzzahlige Vielfache umfasst.

5. Verfahren nach einem der Ansprüche 1 bis 4, umfassend das Zerlegen des zweiten Arrays in eine zweite Vielzahl von binärisierten Arrays; und das Bestimmen (S202,) unter Verwendung der binären Logikeinheit (201), eines jeweiligen Ergebnisses, das gleich dem inneren Produkt jedes der zweiten Vielzahl von binärisierten Arrays und jedes der ersten Vielzahl von binärisierten Arrays ist.

6. Verfahren zum Anwenden eines Filters auf ein binäres Signal, um ein gefiltertes Signal zu erzeugen, das eine Vielzahl von Werten umfasst, wobei das Verfahren das Bestimmen jedes Werts des gefilterten Signals als ein inneres Produkt zwischen dem Filter und einem jeweiligen Abschnitt des binären Signals unter Verwendung des Verfahrens nach einem der Ansprüche 1 bis 5 umfasst.

7. Verfahren zum Dezimieren eines binären Signals, wobei das Verfahren mindestens eine Filterstufe, die unter Verwendung des Verfahrens nach Anspruch 6 implementiert wird, und mindestens eine Dezimierungsstufe umfasst.

8. Verfahren nach Anspruch 6 oder Anspruch 7, wobei das binäre Signal ein Pulsdichtemodulationssignal (PDM-Signal) ist.

9. Compiler zum Kompilieren von Code in eine Reihe von Maschinencodeanweisungen zur Ausführung durch einen Prozessor (100), der eine binäre Logikeinheit (201) umfasst, wobei die Maschinencodeanweisung mindestens eine binäre Anweisung für das innere Produkt zur Ausführung durch die binäre Logikeinheit (201) umfasst, wobei der Compiler so konfiguriert ist, dass er:

als Reaktion auf das Empfangen von Code, der eine Operation des inneren Produkts zwischen einem ersten Array und einem zweiten Array umfasst, wobei das erste Array eine Vielzahl von Elementen umfasst, die mindestens ein nicht-binäres Element einschließen, den Code in eine Reihe von Maschinencodeanweisungen kompiliert, die, wenn sie von dem Prozessor (100) ausgeführt werden, den Prozessor (100) veranlassen, das innere Produkt zu bestimmen, durch:

Zerlegen (S201) des ersten Arrays in eine Vielzahl von binären Arrays durch Bestimmen einer jeweiligen binären Vektordarstellung jedes Elements in einer Vektorbasis mit einem Satz von Basisvektoren, wobei jede binäre Vektordarstellung aus einem jeweiligen Satz von binären Komponenten in der Vektorbasis besteht, sodass eine lineare Kombination der binären Komponenten mit den jeweiligen Basisvektoren gleich dem jeweiligen Element des ersten Arrays ist; wobei jeder binäre Vektor die binären Werte umfasst, die demselben Basisvektor aus jeder der binären Vektordarstellungen entsprechen;

Bestimmen (S202), unter Verwendung der binären Logikeinheit (201), eines jeweiligen Ergebnisses, das gleich dem inneren Produkt des zweiten Arrays und jedes jeweiligen der Vielzahl der binären Arrays entspricht;

Kombinieren (S203) der Ergebnisse zu einer Ausgabe durch Summieren der Ergebnisse, die jeweils mit dem jeweiligen Basisvektor des binären Arrays gewichtet sind, der zum Erzeugen dieses Ergebnisses verwendet wurde.

10. Compiler nach Anspruch 9, wobei die Maschinencodeanweisungen den Prozessor (100) veranlassen, das erste Array in die Vielzahl von binären Arrays zu zerlegen, indem auf einen Speicher (102) zugegriffen wird, der eine vorbestimmte binäre Vektordarstellung jedes der Elemente des ersten Arrays speichert.

11. Compiler nach Anspruch 9 oder 10, wobei das Zerlegen zur Kompilierungszeit durchgeführt wird.

12. Compiler nach einem der Ansprüche 9 bis 11, der so konfiguriert ist, dass er:
als Reaktion auf das Empfangen von Code, der eine Faltungsoperation zwischen einem Filter und einem binären Signal umfasst, um ein gefiltertes Signal zu erzeugen, das eine Vielzahl von Werten umfasst, wobei der Filter eine Vielzahl von Elementen umfasst, die mindestens ein nicht-binäres Element einschließen, diesen Code in eine Reihe von Maschinencodeanweisungen kompiliert, die, wenn sie von dem Prozessor (100) ausgeführt werden, den Prozessor (100) dazu veranlassen:
jeden Wert des gefilterten Signals als inneres Produkt zwischen dem Filter und einem jeweiligen Abschnitt des binären Signals unter Verwendung des Zerlegens, Bestimmens und Kombinierens zu bestimmen.

**Revendications**

1. Procédé de détermination d'un produit interne entre un premier tableau d'éléments et un second tableau d'éléments à l'aide d'une unité logique binaire (201) d'un processeur qui est configurée pour déterminer des produits internes entre des tableaux binarisés constitués d'éléments binarisés, le premier tableau comportant au moins un élément non binarisé, le procédé comprenant :

la décomposition (S201) du premier tableau en une pluralité de tableaux binarisés en déterminant une représentation vectorielle binarisée respective de chaque élément du premier tableau dans une base vectorielle ayant un ensemble de vecteurs de base, chaque représentation vectorielle binarisée constituée d'un ensemble respectif de composants binarisés dans la base vectorielle, de telle sorte qu'une combinaison linéaire des composants binarisés avec les vecteurs de base respectifs est égale à l'élément respectif du premier tableau ; dans lequel chaque tableau binarisé comprend les valeurs binarisées correspondant au même vecteur de base provenant de chacune des représentations vectorielles binarisées ;
la détermination (S202), à l'aide de ladite unité logique binaire (201), d'un résultat respectif égal au produit interne du second tableau et de chaque tableau binarisé respectif parmi la pluralité de tableaux binarisés ;
la combinaison (S203) des résultats en une sortie en additionnant les résultats chacun pondéré par le vecteur de base respectif du tableau binarisé utilisé pour générer ce résultat.

2. Procédé selon la revendication 1, dans lequel ladite décomposition comprend la détermination des représentations vectorielles binarisées respectives en accédant à une mémoire stockant une représentation vectorielle binarisée prédéterminée de chacun des éléments du premier tableau.

3. Procédé selon la revendication 1 ou la revendication 2, dans lequel ladite décomposition est réalisée au moment de la compilation.

4. Procédé selon l'une quelconque des revendications 1 à 3, dans lequel ladite base vectorielle se présente sous la forme : base[j] = 2j pour 0≤j<N-1 ; base[j] =2j-l pour j=N-l, chaque combinaison linéaire étant égale au double de l'élément respectif du premier tableau ; et dans lequel ladite combinaison des résultats en la sortie comprend la division de la somme pondérée par ledit multiple entier.

5. Procédé selon l'une quelconque des revendications 1 à 4, comprenant la décomposition du second tableau en une seconde pluralité de tableaux binarisés ; et la détermination (S202), à l'aide de ladite unité logique binaire (201), d'un résultat respectif égal au produit interne de chacun parmi la seconde pluralité de tableaux binarisés et chacun parmi la première pluralité de tableaux binarisés.

6. Procédé d'application d'un filtre à un signal binaire pour générer un signal filtré comprenant une pluralité de valeurs, le procédé comprenant la détermination de chaque valeur du signal filtré comme un produit interne entre le filtre et une partie respective du signal binaire à l'aide du procédé selon l'une quelconque des revendications 1 à 5.

7. Procédé de décimation d'un signal binaire, le procédé comprenant au moins une étape de filtrage implémentée à l'aide du procédé selon la revendication 6, et au moins une étape de décimation.

8. Procédé selon la revendication 6 ou la revendication 7, dans lequel le signal binaire est un signal de modulation de densité d'impulsion (PDM).

9. Compilateur permettant de compiler un code en une série d'instructions en code machine destinées à être exécutées par un processeur (100) comprenant une unité logique binaire (201), lesdites instructions en code machine comprenant au moins une instruction de produit interne binaire destinée à être exécutée par l'unité logique binaire (201), le compilateur étant configuré pour :
en réponse à la réception d'un code comprenant une opération de produit interne entre un premier tableau et un second tableau, le premier tableau comprenant une pluralité d'éléments comportant au moins un élément non binaire, compiler ledit code en une série d'instructions en code machine qui lorsqu'elles sont exécutées par le processeur (100), amènent le processeur (100) à déterminer le produit interne par :

la décomposition (S201) du premier tableau en une pluralité de tableaux binaires en déterminant une représentation vectorielle binaire respective de chaque élément dans une base vectorielle ayant un ensemble de vecteurs de base, chaque représentation vectorielle binaire constituée d'un ensemble respectif de composants binaires dans la base vectorielle de telle sorte qu'une combinaison linéaire des composants binaires avec les vecteurs de base respectifs est égale à l'élément respectif du premier tableau ; dans lequel chaque vecteur binaire comprend les valeurs binaires correspondant au même vecteur de base provenant de chacune des représentations vectorielles binaires ;
la détermination (S202), à l'aide de ladite unité logique binaire (201), d'un résultat respectif égal au produit interne du second tableau et de chaque tableau binaire respectif parmi la pluralité de tableaux binaires ;
la combinaison (S203) des résultats en une sortie en additionnant les résultats chacun pondéré par le vecteur de base respectif du tableau binaire utilisé pour générer ce résultat.

10. Compilateur selon la revendication 9, dans lequel les instructions en code machine amènent le processeur (100) à décomposer le premier tableau en la pluralité de tableaux binaires en accédant à une mémoire (102) stockant une représentation vectorielle binaire prédéterminée de chacun des éléments du premier tableau.

11. Compilateur selon la revendication 9 ou la revendication 10, dans lequel ladite décomposition est réalisée au moment de la compilation.

12. Compilateur selon l'une quelconque des revendications 9 à 11, étant configuré pour :
en réponse à la réception d'un code comprenant une opération de convolution entre un filtre et un signal binaire pour générer un signal filtré comprenant une pluralité de valeurs, le filtre comprenant une pluralité d'éléments comportant au moins un élément non binaire, compiler ledit code en une série d'instructions en code machine qui lorsqu'elles sont exécutées par le processeur (100), amènent le processeur (100) à :
déterminer chaque valeur du signal filtré comme un produit interne entre le filtre et une partie respective du signal binaire à l'aide de ladite décomposition, détermination et combinaison.

100

101

108

107

Instruction
Memory

Data Memory

Execution
Unit

XNOR

RA

Register File

105  202

201

106

Figure 1

```
┌─────────────────────────────────────────┐
│                                          │
│   Determine binary vector represenations │ ⎰ S201
│                                          │
└─────────────────────────────────────────┘
                    │
                    ▼
┌─────────────────────────────────────────┐
│                                          │
│          Generate binary vectors         │ ⎰ S202
│                                          │
└─────────────────────────────────────────┘
                    │
                    ▼
┌─────────────────────────────────────────┐
│                                          │
│      Apply binary filters to binary signal │ ⎰ S203
│                                          │
└─────────────────────────────────────────┘
                    │
                    ▼
┌─────────────────────────────────────────┐
│                                          │
│          Combine result vectors          │ ⎰ S204
│                                          │
└─────────────────────────────────────────┘
```

# Figure 2

Figure 3

Figure 4a

Figure 4b

Figure 4c

Figure 4d

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2021397930 A
- WO 2021160300 A